Europäisches Patentamt

European Patent Office

Office européen des brevets

(19)

(11) Veröffentlichungsnummer : **0 234 660 B1**

(12) # EUROPÄISCHE PATENTSCHRIFT

(45) Veröffentlichungstag der Patentschrift :
**21.11.91 Patentblatt 91/47**

(51) Int. Cl.$^5$ : **G11B 15/675**

(21) Anmeldenummer : **87200280.3**

(22) Anmeldetag : **20.02.87**

(54) **Aufzeichnungs- und/oder Wiedergabegerät.**

(30) Priorität : **24.02.86 AT 473/86**

(43) Veröffentlichungstag der Anmeldung :
**02.09.87 Patentblatt 87/36**

(45) Bekanntmachung des Hinweises auf die
Patenterteilung :
**21.11.91 Patentblatt 91/47**

(84) Benannte Vertragsstaaten :
**DE FR GB**

(56) Entgegenhaltungen :
**EP-A- 0 140 211
EP-A- 0 190 044
FR-A- 2 540 274**

(73) Patentinhaber : **N.V. Philips'
Gloeilampenfabrieken
Groenewoudseweg 1
NL-5621 BA Eindhoven (NL)**

(72) Erfinder : **Fleck, Harald
c/o INT. OCTROOIBUREAU B.V. Prof.
Holstlaan 6
NL-5656 AA Eindhoven (NL)**

(74) Vertreter : **Smit, Frederik Jan et al
INTERNATIONAAL OCTROOIBUREAU B.V.
Prof. Holstlaan 6
NL-5656 AA Eindhoven (NL)**

EP 0 234 660 B1

**Beschreibung**

Die Erfindung bezieht sich auf ein Aufzeichnungs- und/oder Wiedergabegerät für einen bandförmigen Aufzeichnungsträger, der in einer quaderförmigen Kassette untergebracht ist, die zwei Hauptwände und vier Seitenwände und einen zum Abdecken einer mit mindestens einer Öffnung versehenen Seitenwand vorgesehenen, entgegen Federkraft von einer Abdeckstellung in eine Offenstellung verstellbaren, um eine Schwenkachse verschwenkbaren Deckel aufweist, mit einem Chassis und mit einer gegenüber dem Chassis verstellbaren Kassettenaufnahme, die entlang eines im wesentlichen L-förmigen Verstellweges von einer Ladeposition, in der eine Kassette mit ihrem Deckel voran in einer Einführrichtung von Hand aus bis in eine vorgegebene Einführlage in der Kassettenaufnahme einführbar ist, zuerst im wesentlichen parallel zu den Hauptwänden der Kassette und darauffolgend senkrecht zu den Hauptwänden der Kassette in eine Betriebsposition, in der eine Kassette eine Betriebslage einnimmt, verstellbar ist, und mit einem am Chassis um eine parallel zur Schwenkachse des Deckels verlaufende Schwenkachse schwenkbar gelagerten, von einer Ruheposition in eine Arbeitsposition verstellbaren, zum Öffnen des Deckels vorgesehenen Hebel, der eine zum Zusammenwirken mit dem Deckel vorgesehene Verstellfläche aufweist, die beim Verstellen der Kassette in ihre Betriebslage unter Verstellung des Hebels von seiner Ruheposition in seine Arbeitsposition den Deckel von seiner Abdeckstellung in seine Offenstellung verstellt.

Bei einem solchen im Handel erhältlichen Gerät wird der Hebel von dem zu öffnenden Deckel der Kassette verschwenkt, wobei die Verstellfläche des Hebels zur Gänze als Auflauffläche ausgebildet ist, die einen von der Abdeckstellung zur Offenstellung des Deckels hin ansteigenden Verlauf aufweist und die aufgrund des Auflaufens des Deckels auf sie beim Verstellen der Kassette in ihre Betriebslage für ein Öffnen des Deckels sorgt. Dabei wird ein Teil der Verstellbewegung des Deckels bereits beim Verstellen der Kassette parallel zu ihren Hauptwänden und der restliche Teil der Verstellbewegung des Deckels beim Verstellen der Kassette senkrecht zu ihren Hauptwänden erreicht. Um mit einem möglichst kurzen Hub für die Kassette und die Kassettenaufnahme senkrecht zu den Hauptwänden auszukommen, was für eine möglichst geringe gewünschte Bauhöhe des Gerätes Voraussetzung ist, muss der Deckel bereits beim Verstellen der Kassette parallel zu ihrer Hauptwänden möglichst weit geöffnet werden, weil dann der restliche Teil der Verstellbewegung des Deckels möglichst klein ist und mit einem möglichst kurzen Hub erreichbar ist. Um dies zu erreichen, weist beim bekannten Gerät die Verstellfläche des Hebels einen relativ stark ansteigenden Verlauf auf. Ein solcher stark ansteigender Verlauf der Verstellfläche bewirkt aber über den Deckel relativ grosse Reaktionskräfte auf die Kassette, die entgegen der Einführrichtung der Kassette in die Kassettenaufnahme wirken. Wenn die Kassette nur mit Federkraft in ihrer Einführlage in der Kassette festgehalten ist, kann es durch diese Reaktionskräfte zu einem Verschieben der Kassette innerhalb der Kassettenaufnahme aus ihrer Einführlage kommen, wonach die Kassette nicht ordnungsgemäss in ihre Betriebslage gebracht werden kann und daher eine Betriebsstörung auftritt. Ferner sind der Steigung einer solchen stark ansteigenden Verstellfläche Grenzen gesetzt, weil sonst die Gefahr besteht, dass es beim Verstellen der Kassette parallel zu ihren Hauptwänden zwischen der Verstellfläche und dem Deckel bei ungünstigen Reibungsverhältnissen zu einen Selbsthemmung kommt. Bei einer Selbsthemmung wird der Deckel in seiner Abdeckstellung blockiert, was einen Betrieb überhaupt unmöglich macht. Um dem vorzubeugen, müssen vorgegebene Grenzen für die Steigung der Verstellfläche eingehalten werden. Hierdurch ist aber die beim Verstellen der Kassette parallel zu ihren Hauptwänden erreichbare Verstellbewegung des Deckels begrenzt, was im Hinblick auf einen möglichst geringen Hub für die Kassette und die Kassettenaufnahme senkrecht zu den Hauptwänden und folglich auf eine möglichst geringe Bauhöhe des Gerätes ungünstig ist.

Die Erfindung hat sich zur Aufgabe gestellt, die vorstehend angeführten Schwierigkeiten zu vermeiden und ein Gerät zu schaffen, das eine möglichst geringe Bauhöhe aufweist und bei dem beim Verstellen der Kassette parallel zu ihren Hauptwänden praktisch keine entgegen der Einführrichtung der Kassette in die Kassettenaufnahme wirksamen Reaktionskräfte auf die Kassette einwirken und keine Gefahr einer Selbsthemmung zwischen Verstellfläche und Deckel besteht. Hierfür ist die Erfindung dadurch gekennzeichnet, dass die Kassettenaufnahme einen Mitnehmer aufweist und dass der Hebel einen in den im wesentlichen L-förmigen Verstellweg des Mitnehmers ragenden Anschlag aufweist, über den der Mitnehmer der Kassettenaufnahme bei der Verstellung von ihrer Ladeposition in ihre Betriebsposition den Hebel aus seiner Ruheposition in Richtung zu seiner Arbeitsposition verstellt, wobei die Verstellfläche des Hebels den Deckel aus seiner Abdeckstellung in Richtung zu seiner Offenstellung verstellt. Auf diese Weise ist erreicht, dass der Hebel von der Kassettenaufnahme antreibbar ist, um ihn aus seiner Ruheposition in Richtung zu seiner Arbeitsposition zu verstellen. Dabei ist durch die Wahl des Übersetzungsverhältnisses, also des Abstandes des Anschlages des Hebels von der Schwenkachse desselben, ein grosser Verstellbereich für den Hebel und damit der Verstellfläche beim Verstellen der Kassettenaufnahme parallel zu den Hauptwänden der Kassette erreichbar. Hierdurch kann der über die Verstellfläche verstellte Deckel bereits beim Verstellen der Kassette parallel zu ihren Hauptwänden möglichst weit geöffnet werden, so dass mit einem kurzen Hub für die Kassette und die Kassettenaufnahme senkrecht zu den Hauptwänden der Kassette das Auslangen gefunden und dadurch eine möglichst geringe Bauhöhe des Gerätes erreicht wird. Ferner kann dabei der Verstellfläche ein solcher Verlauf gegeben werden, dass keinesfalls die Gefahr einer Selbsthemmung zwischen der Verstellfläche und dem Deckel auftritt und dass über diese Verstellfläche keine entgegen der Einführrichtung der Kassette in die Kassettenaufnahme gerichteten Reaktionskräfte auf die Kassette ausgeübt werden. Somit bleibt die Kassette auch dann sicher in ihrer Einführlage in der Kassettenaufnahme festgehalten, wenn sie nur mit Federkraft in dieser Einführlage festgehalten ist, und kann daher ungestört in ihre Betriebslage gebracht werden.

Aus der DE-PS 26 36 512 ist ein Gerät mit einer um eine Achse aus dem Gerät heraus verschwenkbaren und nicht entlang eines L-förmigen Verstellweges im Gerät verstellbaren Kassettenaufnahme bekannt. Es handelt sich somit um ein Gerät einer vollkommen anderen Gattung, bei dem die Verstellbewegung der Kassettenaufnahme den ausserhalb des Gerätes freizuhaltenden Raum bestimmt. Abgesehen davon verlauft bei diesem bekannten Gerät die Schwenkachse eines Hebels zum Öffnen des Deckels einer Kassette senkrecht und nicht parallel zur Schwenkachse des Deckels und ist dieser Hebel zum Öffnen des Deckels mit der Kassettenaufnahme über Kupplungs- und Führungsglieder so gekuppelt, dass bei der Verstellung der Kassettenaufnahme in ihre Betriebsposition der Hebel so verschwenkt wird, dass ein Öffnen des Deckels der Kassette erfolgt. Da die Kupplungs- und Führungsglieder ständig miteinander in Eingriff stehen und neben ihrer Kupplungsfunktion auch eine Führungsfunktion erfüllen, müssen sie hinsichtlich ihrer Ausbildung und ihrer gegenseitigen Anordnung relativ genauen Anforderungen entsprechen, um stets eine einwandfreie Kupplungs- und Führungsfunktion zu gewährleisten. Demgegenüber wird beim erfindungsgemässen Gerät das Zusammenwirken zwischen der Kassettenaufnahme und dem Hebel zum Öffnen des Deckels einer Kassette einfach mit nur einem Mitnehmer an der Kassettenaufnahme und einem in den Verstellweg dieses Mitnehmers ragenden Anschlag am Hebel erreicht, die keine zusätzliche Führungsfunktion erfüllen und deren Ausbildung und gegenseitige Anordnung relativ unkritisch und kontruktiv besonders einfach ist.

Aus der DE-A1-34 02 984 ist ein Gerät bekannt, bei dem an einer entlang eines L-förmigen Verstellweges verstellbaren Kassettenaufnahme ebenfalls ein Mitnehmer vorgesehen ist, von dem her beim Verstellen der Kassettenaufnahme von ihrer Ladeposition in ihre Betriebsposition ein an einem Hebel zum Öffnen eines Deckels einer Kassette vorgesehener Anschlag so verstellbar ist, dass über eine Verstellfläche des Hebels der Deckel der Kassette geöffnet wird. Bei diesem bekannten Gerät erfolgt aber die Verstellung des Anschlages am Hebel vom Mitnehmer her über einen Zwischenhebel, der einen zusätzlichen Aufwand darstellt, und wird die Verstellung des Hebels zum Öffnen des Deckels erst bei der Verstellung der Kassettenaufnahme senkrecht zu den Hauptwänden der Kassette vorgenommen, wobei zwar vom Hebel keine entgegen der Einführrichtung gerichtete Reaktionskräfte über den Deckel auf die Kassette ausgeübt werden, aber zum vollständigen Öffnen des Deckels ein relativ grosser Hub für die Kassette und die Kassettenaufnahme senkrecht zu den Hauptwänden erforderlich ist, der einer möglichst geringen Bauhöhe des Gerätes entgegensteht. Demgegenüber wirkt beim erfindungsgemässen Gerät der Mitnehmer an der Kassettenaufnahme unmittelbar mit dem Anschlag am Hebel zusammen, so dass sich zusätzliche Zwischenglieder erübrigen, und wird die Verstellung des Hebels zum Öffnen des Deckels schon bei der Verstellung der Kassettenaufnahme parallel zu den Hauptwänden der Kassette vorgenommen und möglicht weit geöffnet, so dass zum vollständigen Öffnen des Deckels mit einem kurzen Hub für die kassette und die Kassettenaufnahme senkrecht zu den Hauptwänden der Kassette das Auslangen gefunden und dadurch eine möglichst geringe Bauhöhe des Gerätes erreicht wird.

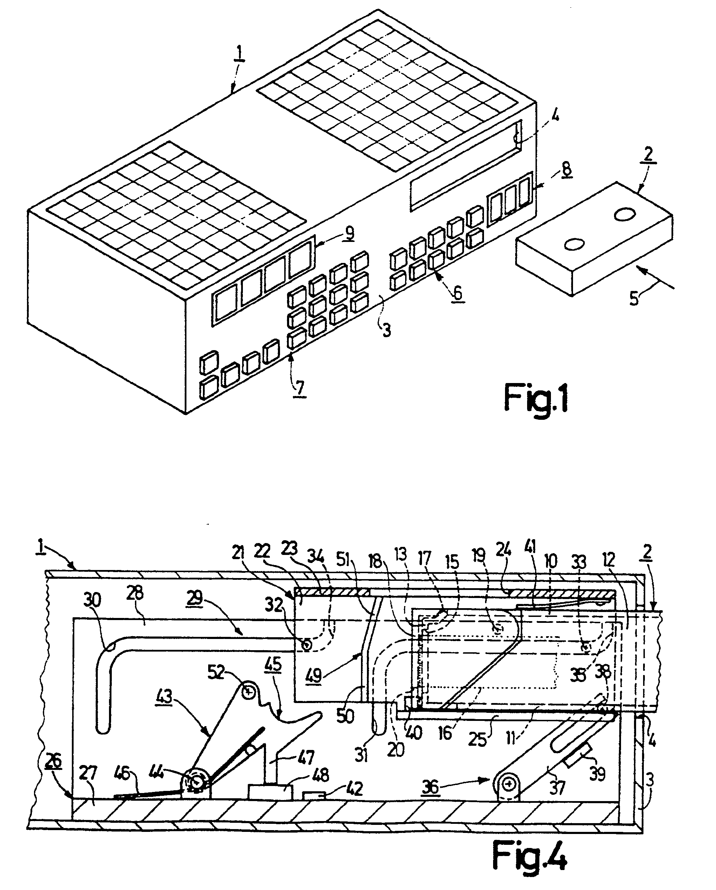

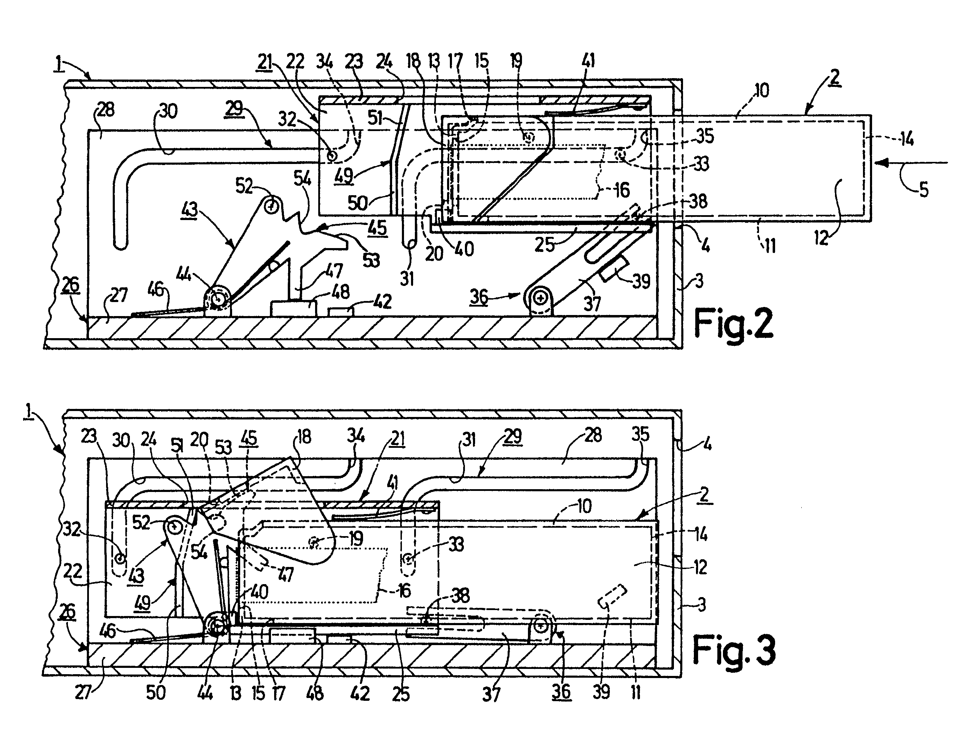

Die Erfindung wird im folgenden anhand von zwei in den Zeichnungen dargestellten Ausführungsbeispielen näher beschrieben, auf die dieselbe jedoch nicht beschrankt sein soll. Die Fig. 1 zeigt in einem verkleinerten Massstab schematisch in einer Schrägansicht ein Aufzeichnungsund Wiedergabegerät für Fernsehsignale und Tonsignale gemäss einem ersten Ausführungsbeispiel, in das eine Kassette einsetzbar ist, die einen bandförmigen, zwischen zweinebeneinander liegenden Wickelkernen verlaufenden, magnetisierbaren Aufzeichnungsträger enthält und die zum Abdecken einer langen Seitenwand einen schwenkbaren Deckel aufweist. Die Fig. 2 zeigt in einem grösseren Massstab als in Fig. 1 etwa in natürlicher Grösse teilweise im Schnitt eine Seitenansicht eines Teiles des Gerätes gemäss Fig. 1 mit einer verstellbaren Kassettenaufnahme für eine Kassette, wobei sich die Kassettenaufnahme in ihrer Ladeposition befindet und der Deckel der Kassette geschlossen ist. Die Fig. 3 zeigt analog wie die Fig. 2 den die Kassettenaufnahme enthaltenden Teil des Gerätes gemäss Fig. 1, wobei sich die Kassettenaufnahme in ihrer Betriebsposition befindet und der Deckel der Kassette mit einem Hebel, der eine den Deckel untergreifende Verstellfläche aufweist, geöffnet ist. Die Fig. 4 zeigt analog wie die Fig. 2 den die Kassettenaufnahme enthaltenden Teil eines anderen Gerätes gemäss einem zweiten Ausführungsbeispiel, wobei sich die Kassettenaufnahme in ihrer Ladeposition befindet und der Deckel der Kassette geschlossen ist und der Hebel zum Öffnen des Deckels eine den Deckel hintengreifende Verstellfläche aufweist.

Die Fig. 1 zeigt ein Aufzeichnungs- und Wiedergabegerät 1, das zum Aufzeichnen und Wiedergeben Von Fernsehsignalen und Tonsignalen auf einem bandförmigen, magnetisierbaren Aufzeichnungsträger, im folgenden kurz Magnetband genannt, ausgebildet ist. Das Magnetband ist in einer in Fig. 1 schematisch dargestellten quaderförmigen Kassette 2 untergebracht, die zweinebeneinander liegende Wickelkerne enthält, zwischen denen das Magnetband verläuft, und die durch eine in der Frontwand 3 des Gehäuses des Gerätes vorgesehene Öffnung 4 hindurch in einer mit dem Pfeil 5 angegebenen Einführrichtung in das Gerät 1 händisch einführbar ist. Beim Einführen der Kassette 2 in das Gerät wird dieselbe in eine verstellbare Kassettenaufnahme eingeschoben, deren Aufbau nachfolgend anhand der Figuren 2 und 3 detailliert beschrieben ist. Mit der Kassettenaufnahme wird die Kassette nach dem vollständigen Einführen derselben in das Gerät zuerst parallel und darauffolgend senkrecht zu den Hauptwänden der Kassette in eine in Fig. 3 dargestellte Betriebslage im Gerät gebracht. Zum Einschalten von Betriebsarten des Gerätes, wie "Aufnahme", "Wiedergabe im Normalen Vorlauf", "Wiedergabe im Normalen Rücklauf", "Schneller Vorlauf", "Schneller Rücklauf", "Wiedergabe bei Bandstillstand" und dergleichen, weist das Gerät 1 an der Frontwand 3 einen ersten Satz 6 von Bedienungstasten auf. Zum Vorprogrammieren des Gerätes und zum Eingeben von weiteren Daten, beispielsweise zum Einstellen einer Tageszeituhr, weist das Gerät 1 an der Frontwand 3 einen zweiten Satz 7 von Bedienungstasten auf. Ferner weist das Gerät 1 an der Frontwand 3 zwei Anzeigeeinheiten 8 und 9 auf, deren Anzeigestellen beispielsweise je aus sieben Segmenten aufgebaut sind und die beispielsweise zum Anzeigen von Zählwerkständen eines Zählwerkes zum Messen des Bandverbrauchs und zum Anzeigen von Uhrzeiten dienen.

Bei der Kassette 2 handelt es sich um einen allgemein bekannten Kassettentyp, weshalb von derselben nur jene Teile schematisch dargestellt sind, die im Zusammenhang mit der vorliegenden Erfindung wesentlich sind. Die Kassette 2 weist zwei Hauptwände 10 und 11, zwei kurze Seitenwände 12, von denen in den Figuren 2 und 3 nur eine sichtbar ist, und zwei lange Seitenwände 13 und 14 auf. In der langen Seitenwand 13 sind zwei Öffnungen 15, durch die das mit punktierten Linien angedeutete Magnetband 16 hindurch aus dem Kasetteninneren herausgeführt ist, und eine weitere Öffnung 17 vorgesehen, die sich bis in die Hauptwände 10 und 11 hinein erstreckt und die als Freistellung für einen Kassettendeckelöffner ausgenützt werden kann Die Kassette 2 weist zum Abdecken der mit den Öffnungen 15 und 17 versehenen langen Seitenwand 13 und des entlang dieser Seitenwand geführten Magnetbandes 16 einen Deckel 18 auf, der um eine senkrecht zu den kurzen Seitenwänden 12 verlaufende Schwenkachse 19 verschwenkbar und entgegen Federkraft von einer in Fig. 2 dargestellten Abdeckstellung, in der er mit einer lösbaren Verriegelungseinrichtung verriegelbar ist, in eine in Fig. 3 dargestellte Offenstellung verstellbar ist. Die erwähnte Federkraft wird von einer in der Kassette untergebrachten Feder aufgebracht. Diese Feder und die Verriegelungseinrichtung sind in den Figuren 2 und 3 der Einfachheit halber nicht dargestellt. An seinem der unteren Hauptwand 11 zugewandten Ende weist der Deckel 18 zwei Öffnungen 20 auf, durch die hindurch Begrenzungsanschläge mit der langen Seitenwand 13 in Wirkverbindung treten können, wenn die Kassette in die Kassettenaufnahme eingeschoben wird, wie nachfolgend anhand der Figuren 2 und 3 beschrieben wird.

Wie bereits erwähnt, weist das Gerät 1 zum Überführen einer in das Gerät händisch eingeführten Kassette 2 in ihre Betriebslage eine verstellbare Kassettenaufnahme 21 auf. Wie aus den Figuren 2 und 3 ersichtlich ist, ist die Kassettenaufnahme 21 im wesentlichen schachtförmig ausgebildet und weist zwei Seitenwände 22, von denen in den Figuren 2 und 3 nur eine sichtbar ist, und eine die beiden Seitenwände miteinander verbindende Deckenwand 23, die mit einem Durchbruch 24 versehen ist, und zwei von den Seitenwänden abgewikelte, zueinander hin gerichtete Bodenwandabschnitte 25 auf, von denen in den Figuren 2 und 3 nur einer sichtbar ist.

Die Kassettenaufnahme 21 ist gegenüber einem Chassis 26 des Gerätes 1 verstellbar, das aus einer Bodenplatte 27 und zwei von dieser rechtwinklig abgebogenen Seitenplatten 28, von denen in den Figuren 2 und 3 nur eine sichtbar ist, besteht. Die Kassettenaufnahme 21 ist entlang eines L-förmigen Verstellweges von einer in Fig. 2 dargestellten Ladeposition zuerst parallel zu den Hauptwänden 10 und 11 der Kassette 2 und darauffolgend senkrecht zu den Hauptwänden 10 und 11 der Kassette 2 in eine in Fig. 3 dargestellte Betriebsposition verstellbar. Zum Führen der Kassettenaufnahme 21 entlang dieses L-förmigen Verstellweges ist zwischen der Kassettenaufnahme und den beiden Seitenplatten 28 des Chassis 26 eine Führungseinrichtung 29 vorgesehen. Die Führungseinrichtung 29 weist in jeder Seitenplatte 28 zwei den L-förmigen Verstellweg festlegende L-förmige Führungsnuten 30 und 31 auf. Ferner weist die Führungseinrichtung 29 an jeder Seitenwand 22 der Kassettenaufnahme 21 zwei in dieselbe eingesetzte Führungsstifte 32 und 33 auf, die mit ihren freien Enden in die Führungsnuten 30 und 31 ragen. Um die Kassettenaufnahme 21 bei ihrer Montage im Gerät mit ihren Führungsstiften 32 und 33 einfach in die Führungsnuten 30 und 31 einsetzen zu können, weisen die Führungsnuten an ihren der Frontwand 3 zugewandten Enden je eine abgewinkelte Verlängerungsnut 34 und 35 auf, die sich bis zum Ende der Seitenplatten 28 erstrecken und in deren offene Enden bei der Montage der Kassettenaufnahme 21 die Führungsstifte 32 und 33 einfach von oben her einführbar sind.

Zum Antreiben der Kassettenaufnahme 21, um dieselbe von ihrer Ladeposition in ihre Betriebsposition und umgekehrt zu verstellen, ist eine Antriebseinrichtung 36 vorgesehen, die einen an der Bodenplatte 27 des Chassis 26 schwenkbar gelagerten Antriebshebel 37 aufweist. Der Antriebshebel 37 umgreift mit seinem gabelförmigen Ende einen von der in den Figuren 2 und 3 sichtbaren Seitenwand 22 der Kassettenaufnahme 21 abstehenden Stift 38, wodurch die Antriebsverbindung zur Kassettenaufnahme 21 hergestellt ist. Bei in seiner Ladeposition befindlicher Kassettenaufnahme 21 stützt sich der Antriebshebel 37 an einem von der in den Figuren 2 und 3 sichtbaren Seitenplatte 28 abstehenden Anschlag 39 ab, der zur Festlegung der Ladeposition der Kassettenaufnahme 21 vorgesehen ist. Der Antriebshebel 37 ist beispielsweise über ein Zahnradgetriebe, ein Schneckengetriebe oder über eine mit einer Verstellkulisse versehene Antriebsscheibe und ein von dieser antreibbares Hebelgetriebe antreibbar, was aber nicht dargestellt ist, weil der Antrieb für die Kassettenaufnahme für die vorliegende Erfindung nicht wesentlich ist.

In der Ladeposition der Kassettenaufnahme 21 ist, wie dies aus Fig. 2 ersichtlich ist, eine Kassette 2 mit ihrem Deckel 18 voran in der Einführrichtung 5 von Hand aus bis in eine vorgegebene Einführlage in der Kassettenaufnahme einführbar. Die Einführlage ist hierbei durch zwei von den Bodenwandabschnitten 25 in Richtung zur Deckenwand 23 abstehende Begrenzungsanschläge 40 festgelegt, die beim Einführen der Kassette 2 in die Kassettenaufnahme 21 in die beiden Öffnungen 20 im Deckel 18 eintreten und durch sie hindurch mit der langen Seitenwand 13 der Kassette 2 in Wirkverbindung treten. In dieser Einführlage ist die Kassette 2 mit Hilfe von zwei an der Deckenwand 23 befestigten Blattfedern 41 kraftschlüssig festgehalten, die auf die obere Hauptwand 10 der Kassette 2 drücken und dadurch die Kassette auf die beiden Bodenwandabschnitte 25 niederhält.

In der Betriebsposition der Kassettenaufnahme 21, die dadurch festgelegt ist, dass sich ihre Bodenwandabschnitte 25 an zwei von der Bodenplatte 27 des Chassis 26 abstehenden Positionieranschlägen 42 abstützen, nimmt die Kassette 2 ihre Betriebslage ein. In dieser Betriebslage liegt die Kassette 2 auf nicht dargestellten Positionieranschlägen für dieselbe auf, gegen die sie mit den Federn 41 gedrückt wird, wobei sie von den Bodenwandabschnitten 25 der Kassettenaufnahme 21 geringfügig abgehoben ist. In dieser Betriebslage stehen zwei antreibbare Wickeldorne des Gerätes mit den beiden in der Kassette untergebrachten Wickelkernen in Antriebsverbindung. Ferner wird das Magnetband mit einer Bandführungseinrichtung au der Kassette herausgeführt und um eine trommelförmige Abtasteinrichtung geschlungen, die rotierend antreihbare Magnetköpfe zum Aufzeichnen oder Wiedergeben von Fernsehsignalen in schräg zur Längsrichtung des Magnetbandes verlaufenden Spuren aufweist, sowie mit weiteren Bandführungen, Magnetköpfen und einer Bandantriebswelle in Wirkverbindung gebracht. Danach ist dann ein Aufzeichnungs- oder Wiedergabevorgang oder eine andere Betriebsart durchführbar. Da die vorerwähnten Einrichtungn für vorliegende Erfindung nicht wesentlich sind, sind sie der Einfachheit halber nicht dargestellt.

Um das Magnetband 16 überhaupt aus der Kassette 2 herausführen zu können, muss selbstverständlich zuvor der Deckel 18 geöffnet werden. Hierfür ist ein an der Bodenplatte 27 des Chassis 26 schwenkbar gelagerter Hebel 43 vorgesehen, dessen Schwenkachse 44 parallel zur Schwenkachse 19 des Deckels 18 verläuft und der von einer in Fig. 2 dargestellten Ruheposition in eine in Fig. 3 dargestellte Arbeitsposition verstellbar ist. Der Hebel weist eine zum Zusammenwirken mit dem Deckel 18 vorgesehene Verstellfläche 45 auf, die beim Verstellen der Kassette 2 in ihre Betriebslage unter Verstellung des Hebels 43 von seiner Ruheposition in seine Arbeitsposition den Deckel 18 von seiner Abdeckstellung in seine Offenstellung verstellt, wobei sie den Deckel untergreift. Der zum Öffnen des Deckels 18 vorgesehene Hebel 43 ist mit einer Schenkelfeder 46 belastet, die danach trachtet, den Hebel 43 in seiner Ruheposition zu halten, in der sich der Hebel 43 mit einem Fortsatz 47 an einem von der Bodenplatte 27 abstehenden Positionieranschlag 48 abstützt.

Wie aus den Figuren 2 und 3 ersichtlich ist, weist die Kassettenaufnahme 21 einen Mitnehmer auf, der durch eine von der in den Figuren 2 und 3 sichtbaren Seitenwand 22 der Kassettenaufnahme 21 in Richtung zu der in den Figuren 2 und 3 weggeschnittenen Seitenwand hin abstehende Leiste 49 gebildet ist, die aus einem senkrecht zu den Hauptwänden 10 und 11 der Kassette 2 verlaufenden ersten Leistenabschnitt 50 und einem gegenüber diesem geneigt verlaufenden zweiten Leistenabschnitt 51 besteht. Der Hebel 43 weist einen in den L-förmigen Verstellweg des durch die Leiste 49 gebildeten Mitnehmers ragenden Anschlag auf, der durch einen in den Hebel 43 eingesetzten Stift 52 gebildet ist. Auf diese Weise ist erreicht, dass der Hebel 43 von der kassettenaufnahme her antreibbar ist. Selbstverständlich könnte der Stift 52 und der Hebel 43 auch einstückig aus Kunststoff hergestellt sein. Auch könnte der Mitnehmer durch einen von der Kassettenaufnahme abstehenden Stift und der Anschlag am Hebel durch einen von diesem seitlich abstehenden leistenförmigen Fortsatz gebildet sein. Auch könnte der Mitnehmer durch einen in einer Seitenwand der Kassettenaufnahme angebrachten, allseitig abgeschlossenen Schlitz. gebildet sein, durch den als Anschlag ein vom Hebel abstehender Stift hindurchgeführt ist, wobei dann der Hebel in beiden Verstellrichtungen von der Kassettenaufnahme her verstellt wird und daher eine Feder zur Belastung des Hebels sich erübrigt. Bei einem Teil der Verstellung der Leiste 49, nämlich beim Verstellen derselben parallel zu den Hauptwänden 10 und 11 der Kassette, wirkt sie mit dem Stift 52 zusammen. Dabei verstellt die Leiste 49 der Kassettenaufnahme 21 bei deren Verstellung von ihrer Ladeposition in ihre Betriebsposition über den Stift 52 den Hebel 43 aus seiner in Fig. 2 dargestellten Ruheposition in Richtung zu seiner Arbeitsposition, wobei die Verstellfläche 45 des Hebels 43 den Deckel 18 entgegen der Federkraft aus seiner Abdeckstellung in Richtung zu seiner Offenstellung verstellt.

Beim Einführen einer Kassette 2 in die Kassettenaufnahme 21 tritt mit der Verriegelungseinrichtung für den Deckel 18 eine in der Kassettenaufnahme enthaltene Entriegelungseinrichtung in Wirkverbindung und entriegelt die Verriegelungseinrichtung, so dass der Deckel zum Öffnen desselben freigegeben ist. Wenn nach dem vollständigen Einführen der Kassette 2 in die Kassettenaufnahme 21, wonach die Kassette ihre durch die Begrenzungsanschläge 40 festgelegte Einführlage einnimmt, die Antriebseinrichtung 36 eingeschaltet wird, dann wird über den Antriebshebel 37 die Kassettenaufnahme 21 zuerst parallel zu den Hauptwänden 10 und 11 der Kassette 2 verschoben. Nach einem Teil dieser Verstellbewegung stösst die Leiste 49 gegen den Stift 52, wodurch der Hebel 43 von dem Leistenabschnitt 50 entgegen der Kraft der Feder 46 aus seiner Ruheposition in Richtung zu seiner Arbeitsposition verstellt wird. Dabei stösst die Verstellfläche 45 mit einem ersten Abschnitt 53 gegen die Unterkante des Deckels 18 und untergreift ihn, wobei sie den Deckel entgegen der auf ihn einwirkenden Federkraft aus seiner Abdeckstellung in Richtung zu seiner Offenstellung verstellt. Während der weiteren Verstellung der Kassettenaufnahme 21 parallel zu den Hauptwänden der Kassette hebt der Hebel 43 den Deckel 18 weiter an, wobei die Deckelunterkante entlang des ersten Abschnittes 53 der Verstellfläche 45 in Richtung zu einem zweiten Abschnitt 54 der Verstellfläche 45 gleitet. Wenn die Verstellbewegung der Kassettenaufnahme in den senkrecht zu den Hauptwänden der Kassette verlaufenden Teil übergeht, wird der Hebel 43 von dem senkrecht zu den Hauptwänden der Kassette verlaufenden Leistenabschnitt 50 nicht mehr weiter verschwenkt, wobei dann der Hebel 43 eine Position einnimmt, in der die Deckelunterkante bereits an dem zweiten Abschnitt 54 der Verstellfläche 45 anliegt. Bei der weiteren Verstellung der Kassettenaufnahme senkrecht zu den Hauptwänden der Kassette wird der Deckel 18 an seiner Unterkante von dem zweiten Abschnitt 54 der Verstellfläche 45 untergriffen und durch das Absenken der Kassette in ihre Betriebslage weiter entgegen der auf ihn einwirkenden Federkraft geöffnet. Nach dem Absenken der Kassettenaufnahme um den vollen Hub senkrecht zu den Hauptwänden der Kassette, wonach die Antriebseinrichtung 36 für die Kassettenaufnahme automatisch abgeschaltet wird, nimmt der Deckel seine in Fig. 3 dargestellte Offenstellung ein, die durch die Relativlage des federbelasteten Hebels 43 zum Deckel 18 festgelegt ist. Dabei ist der Stift 52 des Hebels 43 von dem zweiten Leistenabschnitt 51 der Leiste 49 freigestellt. Der Fortsatz 47 des Hebels 43 ragt dabei in die Öffnung 17 in der Seitenwand 13 hinein.

Dadurch, dass der Hebel über seinen Stift 52 von der Leiste 49 angetrieben wird, kann durch die Wahl des Übersetzungsverhältnisses, das durch den Abstand des Stiftes 52 von der Schwenkachse 44 des Hebels 43 bestimmt ist, bereits bei einem relativ kleinen Verstellhub der Kassettenaufnahme 21 parallel zu den Hauptwänden der Kassette eine relativ grosse Schwenkbewegung für den Hebel 43 erreicht werden, so dass der Deckel 18 bereits beim Verstellen der Kassettenaufnahme parallel zu den Hauptwänden der Kassette möglichst geöffnet wird. Dadurch muss der Deckel beim Verstellen der Kassettenaufnahme senkrecht zu den Hauptwänden der Kassette weniger verschwenkt werden, so dass die Kassettenaufnahme nur um den zum Ineingriffbringen der Wickeldorne mit den Wickelkernen unbedingt notwendigen Hub senkrecht zu den Hauptwänden der Kassette verstellt werden muss, was im Hinblick auf eine möglichst geringe Bauhöhe des Gerätes vorteilhaft ist. Wie insbesondere aus Fig. 2 ersichtlich ist, weist die Verstellfläche 45 einer solchen Verlauf auf, dass sie etwa senkrecht zur Deckelunterkante an demselben angreift und daher beim Verstellen der Kassette in ihre Betriebslage auf den Deckel 18 praktisch keine Kräfte ausübt, die entgegen der Einführrichtung 5 gerichtet sind. Hierdurch ist erreicht, dass die Kassette 2 nur mit der Kraft der Federn 41 sicher in ihrer durch die Begrenzungsanschläge 40 festgelegten Einführlage in der Kassettenaufnahme 21 festgehalten wird. Aufgrund des günstigen Angreifens des Hebels 43 an dem Deckel 18 ist auch jede Gefahr einer Selbsthemmung zwischen dem Hebel und dem Deckel vermieden.

Beim Verstellen der Kassettenaufnahme von ihrer Betriebsposition zurück in ihre Ladeposition gibt der hierbei mit der Kraft der Feder 46 zurückverschwenkte Hebel 43 den Deckel 18 zur Verstellung unter der an ihm angreifenden Federkraft frei, so dass der Deckel 18 in seine Abdeckstellung zurückkehrt.

Bei dem in Fig. 4 dargestellten Gerät 1 weist die Verstellfläche 45 des Hebels 43 zum Öffnen des Deckels 18 einen anderen Verlauf auf als beim Gerät gemäss den Figuren 1 bis 3. In diesem Fall ist die Verstellfläche 45 des Hebels 43 als eine den Deckel 18 bei dessen Verstellbewegung zwischen seiner in Fig. 4 dargestellten Abdeckstellung und seiner nicht dargestellten Offenstellung hintergreifende Fläche ausgebildet. Dadurch ist erreicht, dass die Verstellfläche auf den Deckel bei dessen Verstellung Kräfte ausübt, die eine in der Einführrichtung 5 Verlaufende kompönente aufweisen. Dadurch wird die Kassette vom Hebel 43 gegen die Begrenzungsanschläge 40 gezogen, so dass sie besonders sicher in ihrer Einführlage positioniert wird.

Selbstverständlich bestehen im Rahmen der Erfindung noch weitere Ausbildungsmöglichkeiten, dies insbesondere im Hinblick auf die Ausbildung des Mitnehmers an der kassettenaufnahme, den Anschlag am Hebel und dessen Verstellfläche. Beispielsweise kann der Mitnehmer durch eine an einer Seitenwand der Kassettenaufnahme angebrachte, bis unter die Bodenwandabschnitte ragende Leiste gebildet sein, wobei dann der Anschlag des Hebels näher bei der Schwenkachse des Hebels vorgesehen werden kann, wodurch ein grösseres Übersetzungsverhältnis erreicht wird Der Anschlag des Hebels kann mit diesem auch über einen federbelasteten Zwischenhebel derart verbunden sein, dass der Anschlag vom Mitnehmer mit Überhub gegenüber dem Hebel verstellbar ist, wobei dann der Mitnehmer bei in seiner Arbeitsposition befindlichem Hebel mit dem Anschlag in Eingriff bleiben kann, ohne die Offenstellung des Hebels zu beeinflussen.

### Patentansprüche

1. Aufzeichnung- und/oder Wiedergabegerät (1) für einen bandförmigen Aufzeichnungsträger (16, der in einer quaderförmigen Kassette (2) untergebracht ist, die zwei Hauptwände (10,11) und vier Seitenwände (12,13,14) und einen zum Abdecken (13) einer mit mindestens einer Öffnung (15) versehenen Seitenwand vorgesehen, entgegen Federkraft von einer Abdeckstellung in eine Offenstellung verstellbaren, um eine Schwenkachse (19) verschwekbaren Deckel (18) aufweist, mit einem Chassis (26) und mit einer gegenüber dem Chassis (26) verstellbaren Kassettenaufnahme (21), die entlang eines im wesentlichen L-förmigen Verstellweges (29) von einer Ladeposition, in der eine Kassette (2) mit ihrem Deckel (18) voran in einer Einführrichtung von Hand aus bis in eine vorgegebene Einführlage in der Kassettenaufnahme (21) einführbar ist, zuerst im wesentlichen parallel zu den Hauptwänden (10,11) der Kassette (2) und darauffolgend senkrecht zu den hauptwänden (10,11) der Kassette in eine Betriebsposition, in der eine Kassette (2) eine Betriebslage einnimmt, verstellbar ist, und mit einem am Chassis (26) um eine parallel zur Schwenkachse (19) des Deckels (18) verlaufende Schwenkachse (44) verschwenkbar gelargerten, von einer Ruheposition in eine Arbeitsposition verstellbare, zum Öffnen des Deckels (18) vorgesehen Hebel (43), der eine zum Zusammenwirken mit dem Deckel (18) vorgesehene Verstellfläche (45) aufweist, die beim Verstellen der Kassette (2) in ihre Betriegslage unter Verstellung des Hebels (43) von seiner Ruheposition in seine Arbeitsposition den Deckel (18) von seiner Abdeckstellung in seine Offenstellung verstellt, dadurch gekennzeichnet, dass die Kassettenaufnahme (21) einem Mitnehmer (49) aufweist und dass der Hebel (43) einen in den im wesentlichen L-förmigen Verstellweg des Mitnehmers (49) ragenden Anschlag (52) aufweist, über den der Mitnehmer (49) der Kassettenaufnahme (21) bei deren Verstellung von ihrer Ladeposition in ihre Betriebsposition den Hebel (43) aus seiner Ruheposition in Richtung zu seiner Arbeitsposition verstellt, wobei die Verstellfläche (45) des Hebels (43) den Deckel (18) aus seiner Abdeckstellung in Richtung zu seiner Offenstellung verstellt.

### Claims

1. A recording and/or reproducing apparatus (1) for a record carrier (16) in the form of a tape arranged in a rectangular cassette (2) comprising two main walls (10, 11), four side walls (12, 13, 14) and a shutter (18) for closing a side wall (13) formed with at least one opening (15), which shutter is pivotable about a pivotal axis (19) and is movable from a closed position to an open position against spring force, which apparatus comprises a chassis (26) and a cassette holder (21) which is movable relative to the chassis (26), which holder is movable along a substantially L-shaped path (29) from a loading position, in which a cassette (2) with its shutter (18) facing forward in a direction of insertion can be inserted by hand into the cassette holder (21) in a predetermined insertion position, initially substantially parallel to the main walls (10, 11) of the cassette (2) and subsequently perpendicularly to the main walls (10, 11) of the cassette (2) in an operating position, in which a cassette (2) also occupies an operating position, and comprising a lever (43) which is mounted on the chassis (26) so as to be pivotable about a pivotal axis (44) parallel to the pivotal axis (19) of the shutter (18) and which is movable from a rest position into an operating position, to open the shutter (18), which lever comprises an actuating surface (45) which is adapted to cooperate with the shutter (18) and which during the movement of the cassette (2) into its operating position, while the lever (43) is being moved from its rest position into its operating position, sets the shutter (18) from its closed position to its open position, characterized in that the cassette holder (21) comprises an actuating element (49), and the lever (43) comprises a stop (52) which projects into the substantially L-shaped path of movement of the actuating element (49), <u>via</u> which stop the actuating element (49) of the cassette holder (21) moves the lever (43) from its rest position towards its operating position when said holder is moved from its loading position to its operating position, the actuating surface (45) of the lever (43) moving the shutter (18) from its closed position towards its open position.

## Revendications

1. Appareil d'enregistrement et/ou de reproduction (1) pour un support d'enregistrement en forme de bande (16) qui est logé dans une cassette parallélépipédique (2) comportant deux parois principales (10, 11) et quatre parois latérales (12, 13, 14) ainsi qu'un volet (18) prévu pour couvrir une paroi latérale (13) pourvue d'au moins une ouverture (15), qui peut pivoter autour d'un axe de pivotement (19) et qui peut être déplacé à l'encontre de la sollicitation d'un ressort depuis une position de recouvrement vers une position d'ouverture, ledit appareil comprenant un châssis (26) et un compartiment à cassette (21) mobile par rapport au châssis, qui peut être déplacé, le long d'un trajet essentiellement en L (29) depuis une position de chargement dans laquelle une cassette (2), dont le volet (18) est situé à l'avant, peut être introduite dans le compartiment à cassette (21), à la main, dans une direction d'introduction, jusque dans une position d'introduction prédéfinie dans le compartiment à cassette (21), tout d'abord en substance parallèlement aux parois principales (10, 11) de la cassette et ensuite perpendiculairement à ces parois principales (10, 11) vers une position de fonctionnement dans laquelle une cassette (2) occupe une position opérationnelle, et comprenant un levier (43) monté à pivotement sur le châssis (26) autour d'un axe de pivotement (44) parallèle à l'axe de pivotement (19) du volet (18), déplaçable d'une position de repos vers une position de travail et prévu pour ouvrir le volet (18), ce levier (43) présentant une surface de déplacement (45) prévue pour coopérer avec le volet (18), qui, lors de l'arrivée de la cassette (2) dans sa position opérationnelle, sous l'effet de déplacement du levier (43) de sa position de repos dans sa position de travail, déplace le volet (18) de sa position de recouvrement dans sa position d'ouverture, caractérisé en ce que le compartiment à cassette (21) présente un organe entraîneur (49) et que le levier (43) présente une butée (52) s'étendant dans le trajet en substance en L de l'organe entraîneur (49), par l'intermédiaire de laquelle l'organe entraîneur (49) du compartiment à cassette (21), lors de son déplacement de sa position de chargement vers sa position de fonctionnement, déplace le levier (43) depuis sa position de repos en direction de sa position de travail, la surface de déplacement (45) du levier (43) déplaçant le volet (18) depuis sa position de recouvrement en direction de sa position d'ouverture.

Fig.1

Fig.4

Fig.2

Fig.3

EP 0 234 660 B1